# EUROPEAN PATENT SPECIFICATION

(11) **EP 0 472 582 B1**
(45) Date of publication and mention of the grant of the patent: **03.08.1994**
(21) Application number: 90907379.3
(22) Date of filing: 07.05.1990
(51) Int. Cl.: B29C 65/20, F16L 47/02, B29L 23/22, B29L 31/24

(54) **WELDING OF PLASTIC PIPE ELEMENTS**
SCHWEISSEN VON KUNSTSTOFFROHRELEMENTEN
SOUDAGE D'ELEMENTS DE TUYAUX EN PLASTIQUE

(30) Priority: 18.05.1989 IT 4796789
(43) Date of publication of application: 04.03.1992
(73) Proprietor: MKM S.r.l., Savona (IT)
(72) Inventor: MEIRANA, Giovanni, I-17020 Borghetto S. Spirito (IT)
(74) Representative: Iannone, Carlo Luigi
(86) International application number: PCT/IT90/00048
(87) International publication number: WO 90/14941

(56) References cited:
- FR-A- 1 401 370
- GB-A- 1 246 909
- GB-A- 2 057 965
- US-A- 3 723 229
- US-A- 3 966 528
- US-A- 4 174 248

## Description

This invention relates to an equipment for welding plastic pipe elements which are melt-weldable, to a welding process in which said equipment is employed, to the pipe fittings purposely realized to be employed with said equipment, as well as to the prefabricated pipe elements obtained by means of said equipment and employing said welding process.

In particular, the realization is dealt with of manifolds, or of a part of the same, or of plants for distribution of water or anyway of liquid materials, said plants being provided with particular fittings obtained employing the equipment according to the present invention, the manifold-fittings assembly complex being realized with a melt-weldable plastic material, such as for instance polyethylene, polypropylene, etc.

This type of manifolds or branched connections can be employed in any type of plants for the distribution of hot and/or cold liquids, both in an open and in a closed circuit, such as for instance heating or cooling plants, or irrigation plants and so on.

A particular employment is that intended for radiant- panels heating plants, in which plants plastic material pipe coils are provided, as members embedded within concrete castings or within other masonry elements, or within banks (as for instance in agriculture).

The connection between the manifold fed by the water distribution system and the pipe coil or other plant branches, both made up of a plastic material, or of iron pipes bearing branch pipes of a plastic material, is realized at the present time by means of fittings of various kinds (as for instance pressure fittings, or threaded fittings, or hanger fittings and so on) or by means of combinations thereof.

This type of connection gives rise to a number of different drawbacks, as for instance a loss of seal with time or, sometimes, an even immediate seal loss.

Accordingly, the adoption has been conceived of a welding connection without weld material by melting the portions to be connected.

In some kinds of plants, as for instance in sewer systems, equipment and welding processes are employed which are based on the operation of heating the surfaces to be joined, till obtaining the incipient melting of the same which are in contact with metal surfaces electrically heated, and then of bringing said heated surfaces in contact with one another by exerting a suitable pressure.

In particular, one of the processes employed at present makes use of a metal plate or "mirror", which has plane-parallel surfaces, and incorporates electrical resistances which heat the plane surfaces up to the desired temperature.

This kind of procedure and the relative equipment is advantageously usable for realizing butt welding operations between plane surfaces.

In case it is necessary, as always occurs in the kind of plants mentioned above, to realize the welding between the pipe or manifold and the branching, it is impossible to perform welding operations for branches or parts of pipe coil.

In particular, when the solution that provides the direct welding between the manifold and the pipe coil is adopted, all problems occur relative to the fact that, while the manifold can undergo length changes because of thermal expansion, the pipe coil can be blocked within the structure of masonry so that it cannot shift transversely. Because of that reason, relevant stresses occur in the connection zone.

Moreover, the welding operation performed at the point corresponding to the intersection between two hollow cylinders having uniform thickness walls, i.e. between the manifold and the pipe coil, gives a weld whose contact surface consists of a strip of variable width along the circumference of the smallest pipe, from a minimum width equal to the thickness of the pipe itself, up to a higher value, so that a non-uniform melting is obtained along the whole contour and as a consequence a bad quality weld is obtained.

In GB-A-2,057,965 it is described a heater adapter for making polyethylene pipe connections. In G.B. patent No. 1,246,909, which is the basis of the pre-characterizing portion of claim 1 of the present application, a method and apparatus for welding together tubes of plastics material are described.

The method described comprises machining an approximately semi-cylindrical recess in one of the tubes at the position at which it is to be joined to the other of the tubes to provide it with a joint surface complementary to a joint surface formed by a portion of the wall of the other of the tubes, applying said joint surfaces of the tubes to opposite sides of a heated member shaped to correspond to said joint surfaces to melt the tubes at said joint surfaces, removing heated member from between said joint surfaces and pressing said joint surfaces of the tubes into abutment one with the other to permit the materials of the tubes fuse together to form a joint.

With a view to what has been discussed above, the Applicant has realized an equipment that allows two pipe elements to be welded, as a by-pass at an angle, which are melt-weldable, said equipment allowing an optimal weld to be obtained and the weld itself to be limited, when pipelaying the plant, to a simple butt welding between the fitting and the pipe coil or any other element.

These and other results are obtained realizing a technology that avoids welding directly the pipe coil on the manifold, and that provides the realization of pre-fabricated members which are made up of a manifold and a fitting, which are to be simply butt welded in the following, employing the usual procedures, with the pipe coil, and which allows an absolutely uniform weld between the manifold and the fitting to be obtained.

It is a further object of the present invention that of realizing a fitting, obtained by pressure die-casting, which is endowed with an end to be welded to the manifold or part of a pipe, said end being of a suitably shaped surface so as to couple exactly with the cylindrical surface of the manifold itself, and having a first portion starting from the end welded to the manifold, of thickness variable along its contour.

Accordingly, it is a specific object of the present invention an equipment for welding plastic material, melt-weldable pipe elements, said equipment comprising a metal plate having plane-parallel walls, and endowed with means for heating said plane surfaces, a first and a second element, made up of heat conductive material, respectively for melting the side surface of a first and a second pipe to be welded, in which said first and second elements are two separate welding elements, in which said first pipe is provided with a hole, in which said second element is shaped so as to match with the shape of said second pipe to be welded by butt welding to the first pipe, around said hole, and so as to correspond to the melting surface realized on said first pipe by said first element; said first and second elements being endowed with a back surface for contact with the flat plate, as well as endowed with means for coupling with the plane surface of said plate, characterized in that said first member is of outer elliptical cross-setion, whose edge is raised at the points corresponding to the minor axis of the ellipse, and is of thickness less than that at the points corresponding to the major axis of the ellipse itself, and is provided with a central member made up of a nonconducting material, having a diameter corresponding to the diameter of a hole realized in said first pipe.

Preferably, said first and second element will be realized with steel or aluminum, and they can be coated with Teflon or any other similar inert material.

Further according to the present invention, the central element arranged within said first element and made up of a ceramic material, is threaded inside said first element.

Further according to the present invention the means for coupling the first and the second element with the plate can be made up of a screw passing through the flat back surface of the first element, through a hole obtained in said plate and coupled with a threaded seat provided in said second element.

Moreover, it is an object of the present invention a process for welding plastic material melt-weldable pipe elements comprising the step of assembling the first element and the second element on the opposite plane surface of the plate; said process being characterized in that said first element is completed with its pin during the assembling with the second element and in that it comprises the steps of:
- heating the melting plate with the consequent heating of the first and of the second element;
- bringing the lateral surface of a first pipe, said surface being previously drilled and deoxidized in the part to be melted by means of a scraping device, into contact with the melting surface of the first element;
- bringing the head surface of a pipe length, said head being previously shaped, into contact with the melting surface of the second element;
- heating without pressing till incipient melting of the two parts to be melted; and
- bringing the two melted surfaces into contact under pressure and waiting a few seconds for allowing the molten material to solidify.

It is a further object of the invention also a straight or a bent fitting element whose head is shaped according to the shaping of said second element, said fitting element also having a cylindrical cross-section for realizing the welding operation by butt welding with the pipe coil or any other member.

Moreover, the pipe elements realized employing the equipment and the process according to the present invention are also to be considered as included in the realm and scope of the priority rights of the present application for a patent of industrial invention, said elements comprising at least a manifold on which at least a fitting pipe is welded, said fitting pipe having an inner circular cross-section and an outer cross-section which, at the points corresponding to the weld zone, is of such shape as to realize a contact surface of substantially constant width and of maximum wall thickness at the points corresponding to the maximum stress zone.

Said fitting pipe, of the kind disclosed above, can be straight or bent, and it will preferably be of elliptical cross-section, at the points corresponding to the weld zone.

This invention will be disclosed in the following according to some preferred embodiments of the same with particular reference to the figures of the enclosed drawings wherein:
Figure 1 is a perspective view of the first element of the device according to this invention;
Figure 2 is a perspective view of the second element of the device according to this invention;
Figure 3 is a plan view of the central element of the member shown in Figure 1;
Figure 4 is a side view of the element of Figure 3;
Figure 5 is a side view of the element shown in Figure 1 without the element of Figure 3;
Figure 6 is a vertical cross-sectional view of the element of Figure 5 on the plate of the device according to the present invention;
Figure 7 is a side view of the element of Figure 2;
Figure 8 is a partial cross-sectional side view of the element of Figure 2 arranged on the plate of the device according to this invention;
Figure 9 is a perspective view of an example of a manifold-fitting realized by means of the equipment according to the present invention;
Figure 10 is a first cross-sectional vertical view of a first fitting;
Figure 11 is a second cross-sectional vertical view of the fitting of Figure 10;
Figure 12 is a plan view of the fitting of Figure 10;
Figure 13 is a first cross-sectional vertical view of a second fitting;
Figure 14 is a second cross-sectional vertical view of the second fitting;
Figure 15 is a plan view of the fitting shown in Figure 13; and
Figure 16 is a cross-sectional vertical view of a weld at the point between a manifold and a fitting.

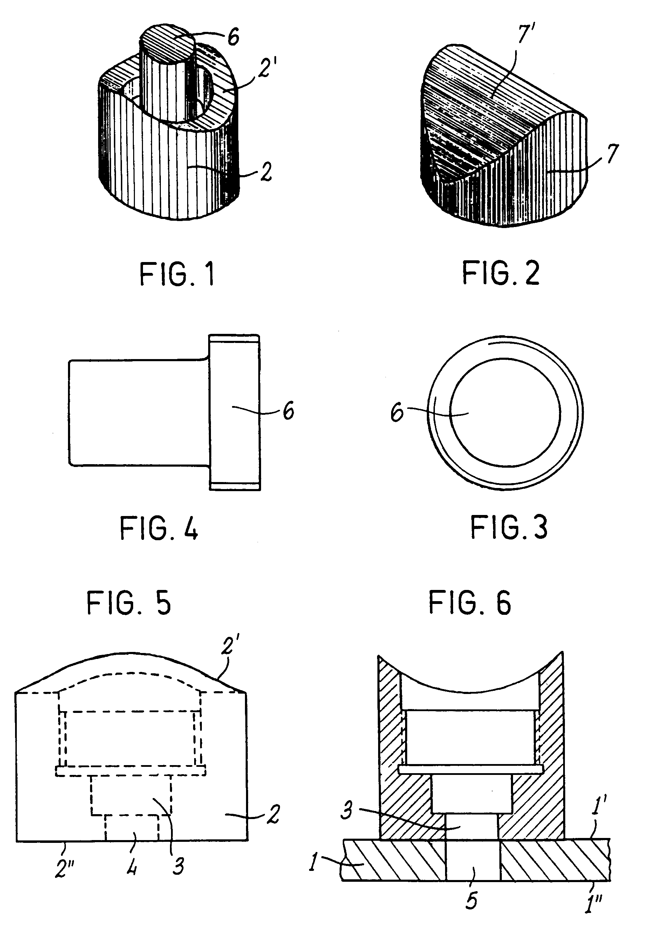

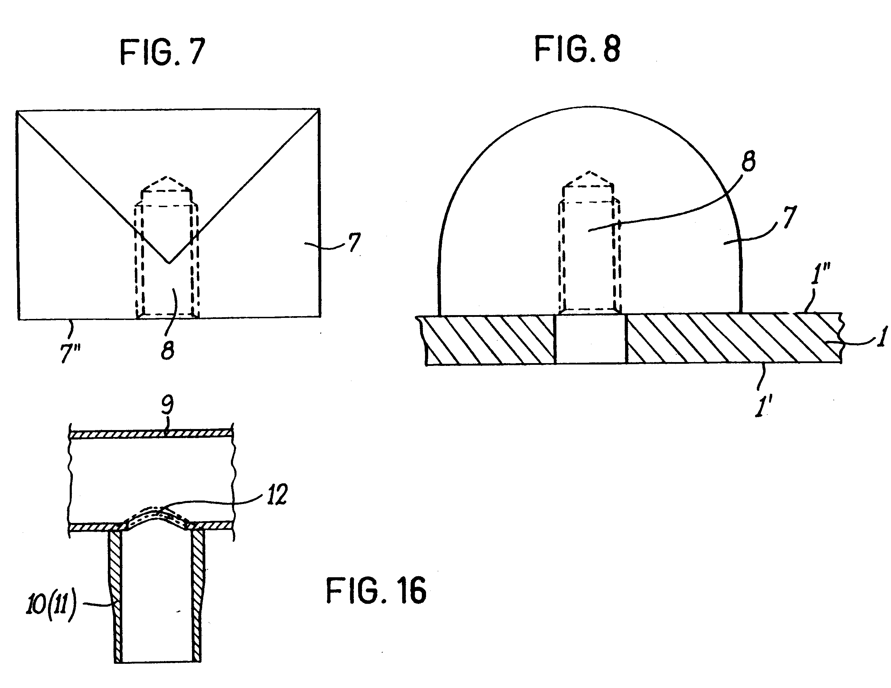

The equipment for performing the welding according to the present invention is illustrated in Figures 1-8.

It comprises a metal plate 1 or "mirror" having two plane-parallel faces 1' and 1'' and bearing incorporated some electrical resistances (not shown) that cause the heating of said faces 1' and 1'' up to the desired temperature.

A first member 2 is so realized as to have a melting surface 2' (see in particular Fig. 1) that gives rise on the manifold, at the points corresponding to the weld zone with the fitting, to a contact surface which is made up of a strip whose width varies along the circumference of the manifold itself, whose minimum thickness is equal to that of the manifold itself, or of the branch pipe, and whose thickness is thicker at the longitudinal axis of the manifold pipe.

The first element 2 is made up of a heat-conducting material, as for instance steel or aluminum.

Its surface 2'', opposite to the surface 2' is a flat surface that couples with the surface 1' of the plate 1.

A seat 3 for the head of a screw (not shown) is realized inside the element 2, said screw, passing through the hole 4, inserts itself into the hole 5 of the plate 1.

A central member 6 is arranged within the inner cavity of the element 2, said central element projecting through the surface 2' and being of a diameter of such size as to match the hole obtained in the manifold, at the point where the fitting is to become coupled.

Said central element 6, consisting of an insulating material of ceramic type, allows the correct positioning of the welding zone on the manifold itself to be performed.

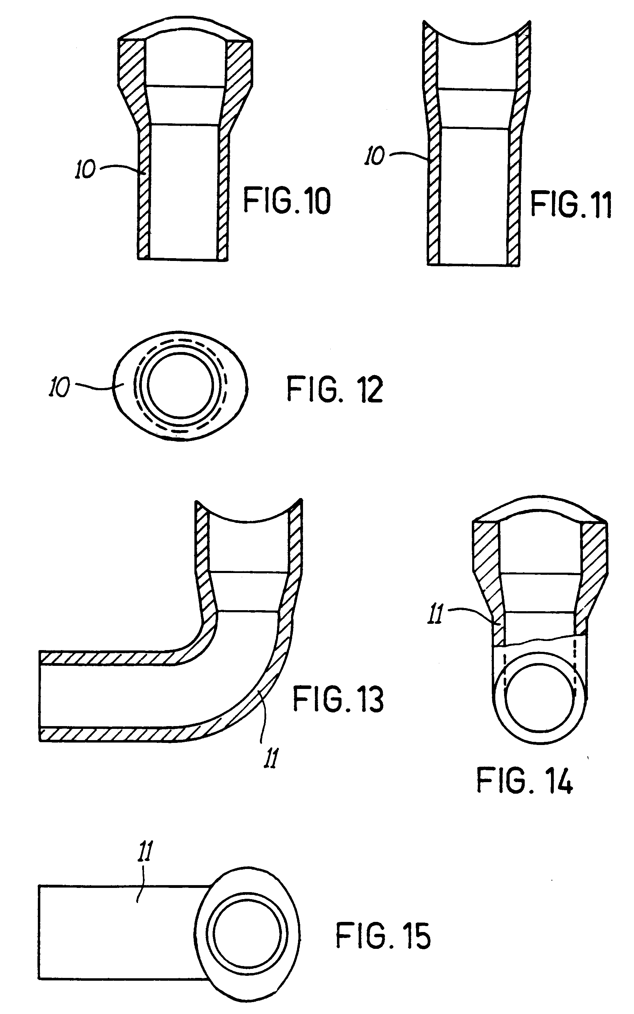

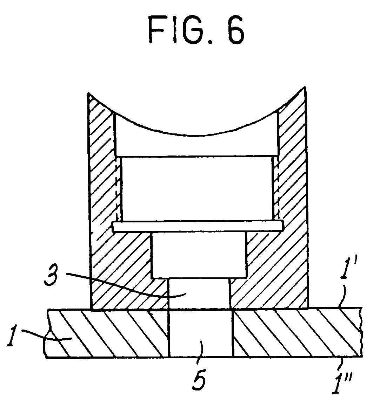

The equipment according to the present invention further comprises a second element 7 (see the Figures 2, 7 and 8) that has a melting surface 7' that matches perfectly the hollowness in a head of a fitting, which in its turn, as will be evident from Figures 10-15, has a welding surface exactly coinciding with the surface realized on the manifold or pipe lengths.

Moreover, said element 7 also has a flat surface 7'' that matches the surface 1'' of the plate 1 and is provided with a threaded seat 8 for coupling with the screw already mentioned above.

The element 7 also will be realized employing a good heat-conducting material.

The welding operation performed by means of the equipment according to the present invention is carried out after all components mentioned above have been assembled, by heating the equipment itself through the electrical resistances and putting the manifold fitting zone in contact with surface 2' of the element 2, and the surface of the fitting pipe in contact with the surface 7' of said element 7; after reaching the incipient melting of the two surfaces to be welded, the two surfaces in question are brought into contact and a sufficient pressure is exerted so that a perfect weld is obtained.

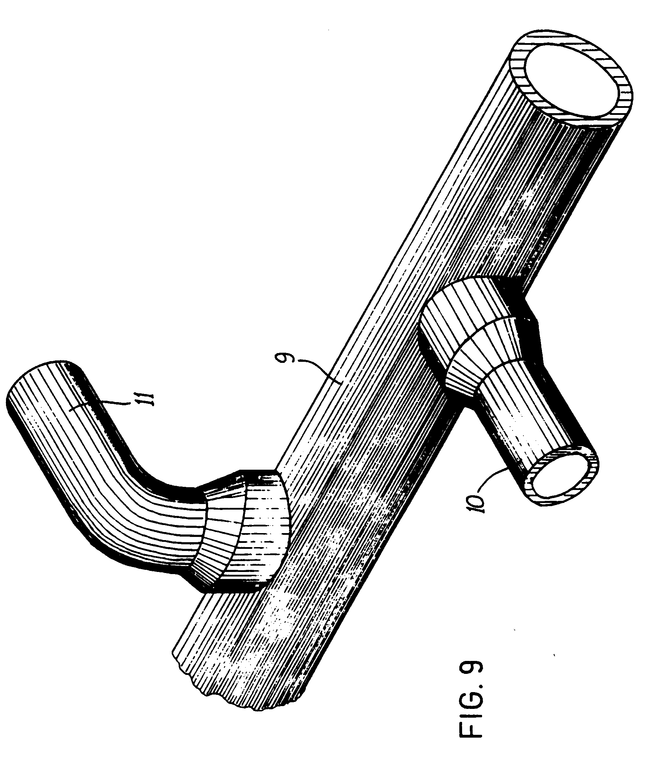

An example of a product obtained employing the equipment according to this invention is illustrated in the Figures 9-16.

In particular, Figure 9 illustrates a manifold 9 bearing two fittings, one of them being of the straight type and pointed out with the reference numeral 10, while the other one is of the bent type and pointed out with the reference numeral 11.

The special fittings (of the straight or the bent type) according to this invention are visible in the Figures 10-15 and can be obtained by pressure die-casting with the already commercially available machines, by previously constructing a suitably shaped die built for the specific shapes desired.

It can be observed that the outer wall of the first length of the fitting 10 or 11 (see also the Figures 1-16), starting from the welding zone of the manifold 9, is of thickness variable along the contour. Accordingly, the fitting 10 or 11 has a wall delimited by two coaxial cylindrical surfaces, the inner one of which is of circular cross-section whereas the outer one is of elliptical cross-section matching the concave elliptical head on the side of the manifold to which the fitting is to be welded.

Thus the result is obtained of having the maximum wall thickness at the point corresponding to the maximum mechanical stress zone of the weld, and the minimum thickness at the zone where the contact surface has a width larger than the thickness of the fitting pipe. Thus the contact strip between the fitting 10 or 11 and the manifold 9 is of substantially constant width.

The free end of the fitting 10 or 11 is on the contrary of circular cross-section so that it can be merely welded by butt welding to the pipe coil which is not shown.

Figure 16 shows the result of the welding between the manifold 9, at the point corresponding to the hole 12, and the fitting 10 (or 11).

This invention has been disclosed with specific reference to some preferred embodiments of the same, but it is to be understood that modifications and/or changes can be introduced in the same by those who are skilled in the art without departing from the scope of the invention for which a priority right is claimed.

## Claims

1. An equipment for welding plastic material, melt-weldable pipe elements (9, 10, 11), said equipment comprising a metal plate (1) having plane-parallel walls (1', 1''), and endowed with means for heating said plane surface, a first (2) and a second (7) element, made up of heat conductive material, respectively for melting the side surface of a first (9) and a second (10, 11) pipe to be welded, in which said first (2) and second (7) elements are two separate welding elements, in which said first pipe (9) is provided with a hole (12), in which said second element (7) is shaped so as to match with the shape of said second pipe (10, 11) to be welded by butt welding to the first pipe (9), around said hole (12), and so as to correspond to the melting surface realized on said first pipe (9) by said first element (2); said first (2) and second (7) elements being endowed with a back surface (2'', 7'') for contact with the flat plate (1), as well as endowed with means (3, 4; 8) for coupling with the plane surface of said plate (1), characterized in that said first member (2) is of outer elliptical cross-section, whose edge is raised at the points corresponding to the minor axis of the ellipse, and is of thickness less than that at the points corresponding to the major axis of the ellipse itself, and is provided with a central member (6) made up of a non-conducting material, having a diameter corresponding to the diameter of the hole (12) realized in said first pipe (9).

2. An equipment according to claim 1, characterized in that said first (2) and second (7) members are realized employing steel or aluminum.

3. An equipment according to claims 1 or 2, characterized in that said first (2) and second (7) members are coated with inert or anti-attack material of the Teflon type.

4. An equipment according to anyone of the preceding claims, characterized in that the central member (6) arranged within said first member (2) is realized employing a ceramic material.

5. An equipment according to anyone of the preceding claims, characterized in that said central member (6) is threaded inside said first member (2).

6. An equipment according to anyone of the preceding claims, characterized in that the means for coupling said first (2) and said second (7) member with said plate (1) are made up of a screw that passes through the back flat surface (2'') of the first member (2), through a hole (5) drilled in said plate (1) which couples with a threaded seat (8) provided in said second member (7).

7. A process for welding plastic material melt-weldable pipe elements in which process the equipment according to anyone of the preceding claims 1-6 is employed, comprising the step of assembling the first element and the second element on the opposite plane surface of the plate; said process being characterized in that said first element is completed with its pin during the assembling with the second element and in that it comprises the steps of:
- heating the melting plate with the consequent heating of the first and of the second element;
- bringing the lateral surface of a first pipe, said surface being previously drilled and deoxidized in the part to be melted by means of a scraping device, into contact with the melting surface of the first element;
- bringing the head surface of a pipe length, said head being previously shaped, into contact with the melting surface of the second element;
- heating without pressing till incipient melting of the two parts

8. A fitting or fitting pipe length having a shape according to the shape of said second element and a cylindrical cross-section for realizing the welding operation by butt welding with the pipe coil or any other member, characterized in that it is made of plastic material, in that its wall is of elliptical cross-section, at the point corresponding to the weld zone, and in that it is of thickness variable along the contour, the thickness of edge on the minor axis of the ellipse being less than that at the points corresponding to the major axis of the ellipse itself. to be melted; and
- bringing the two melted surfaces into contact under pressure and waiting a few seconds for allowing the molten material to solidify.

9. A fitting or pipe length according to claim 8, characterized in that it is straight.

10. A fitting or pipe length according to claim 8, characterized in that it is bent.

## Patentansprüche

1. Anordnung zum Schweissen von schmelzschweissbaren Rohrstuecke aus Kunststoff (9,10,11), mit einer Metallplatte (1), die parallele Waende (1', 1'') aufweist und mit Mitteln zur Heizung derselben versehen ist, einem ersten (2) und einem zweiten Teil (7) aus waermeleitendem Stoff, zum Schmelzen von seitlichen Flaechen eines ersten (9) und eines zweiten zu schweissenden Rohrs (10,11), wobei der erste und zweite Teil (2 bzw. 7) zwei separate Schweissteile bilden und der erste Rohr (9) mit einer Oeffnung (12) versehen ist, wobei der zweite Teil (7) so ausgebildet ist, dass es sich an die Form des zweiten Rohrs (10,11) anpasst, das durch Stumpfschweissen mit dem ersten Rohr (9) um die Oeffnung herum geschweisst werden soll und dass es der auf dem ersten Rohr (9) durch den ersten Teil gebildeten Schmelzflaeche entspricht, wobei der erste (2) und zweite Teil (7) mit einer an die Flachplatte (1) anbringbaren Rueckflaeche, sowie mit Mitteln (3,4;8) zur Kupplung mit der flachen Flaeche der Platte (1) versehen sind, dadurch gekennzeichnet, dass der erste Teil (2) einen elliptischen Querschnitt aufweist, deren Rand an den der kuerzeren Achse der Ellipse entresprechenden Stellen erhoben ist und eine Dicke hat, die kleiner als diejenige an den der laengeren Achse entsprechenden Stellen ist, und mit einem mittleren, aus nicht leitendem Stoff bestehenden Glied (6) versehen ist, dessen Durchmesser dem Durchmesser der im ersten Rohr (9) vorgesehenen Oeffnung (12) entspricht.

2. Anordnung nach Anspruch 1, dadurch gekennzeichnet, dass der erste (2) und zweite Teil (7) aus Stahl oder Aluminium hergestellt sind.

3. Anordnung nach Anspruch 1 oder 2, dadurch gekennzeichnet, dass der erste (2) und zweite Teil (7) mit einem inerten, nicht angreifbaren Stoff, wie Teflon ausgekleidet sind.

4. Anordnung nach je einem der vorangehenden Ansprueche, dadurch gekennzeichnet, dass das im ersten Teil (2) angeordnete Mittelglied aus einem keramischen Stoff besteht.

5. Anordnung nach je einem der vorangehenden Ansprueche, dadurch gekennzeichnet, dass das Mittelglied (6) in den ersten Teil (2) eingeschraubt ist.

6. Anordnung nach je einem der vorangehenden Ansprueche, dadurch gekennzeichnet, dass die Mittel zur Kupplung des ersten (2) und zweiten Teiles (7) mit der Platte (1) aus einer, sich ausserhalb der Rueckflaeche (2'') des ersten Teiles (2) erstreckende und durch eine und in diesem Teil (2) vorgesehene Oeffnung durchgehende Schraube bestehen, die in einen geschnittenen, im zweiten Teil (7) angeordneten Sitz (8) eingeschraubt ist.

7. Verfahren zum Schweissen von schmelz-schweissbaren Rohrstuecken aus Kunststoff, bei dem die Anordnung nach je einem der vorangehenden Ansprueche 1 bis 6 gebraucht wird, mit einem Verfahrenschritt zur Kupplung des ersten Teiles mit dem zweiten Teil auf der Rueckseite der Platte, dadurch gekennzeichnet, dass der erste Teil bei der Kupplung mit dem zweiten Teil durch einen Zapfen vervollstaendigt wird und dadurch dass das Verfahren folgende Verfahrensschritte aufweist:
- Aufheizung der Schmelzplatte mit der dadurch verursachten Aufheizung des ersten und zweiten Teiles;
- Zusammenbringen der vorher gelochten und durch eine Schabevorrichtung am zu schmelzenden Bereich deoxidierten Seitenflaeche eines ersten Rohrs, mit der Schmelzflaeche des zweiten Teiles;
- Aufheizung, ohne Zusammenpressen der beiden Teile bis die beiden zu schmelzenden Teile zu schmelzen beginnen; und
- Zusammendruecken der beiden geschmolzenen Flaechen fuer einige Sekunden bis zur Erstarrung der Schmelze.

8. Verbindungsstueck oder Verbindungsrohrstueck, das gemaess der Form des zweiten Teiles ausgebildet ist und einen zylindrischen Querschnitt hat, zur Durchfuehrung des Schweissverfahrens durch Stumpfschweissen mit Rohrwindung oder einem anderen Teil, dadurch gekennzeichnet, dass es aus Kunststoff besteht, dass seine Wand an der dem Schweissbereich entsprechenden Stelle einen elliptischen Querschnitt hat, und dass es eine laengs seines Umfangs veraenderliche Dicke aufweist, wobei die Randdicke an der der kleinen Achse der Ellipse entsprechenden Stelle kleiner als an der der langen Achse der Ellipse entsprechende Stelle ist.

9. Verbindungsstueck oder Verbindungsrohrstueck nach Anpsruch 8, dadurch gekennzeichnet, dass es gerade ist.

10. Verbindungsstrueck oder Verbindungsrohrstueck nach Anpsruch 8, dadurch gekennzeichnet, dass es gekruemmt ist.

## Revendications

1. Outillage pour le soudage par fusion d'éléments de tuyaux en plastique (9, 10, 11), ledite outillage comprenant une plaque métallique plate (1) ayant parois paralleles (1', 1'') et étant muni de moyens pour chauffer lesdites parois, un premier (2) et un deuxième (7) élément consistant d'un matériau thermoconductive, respectivement pour fondre la surface latérale d'un premier (9) et un deuxième (10, 11) tube à souder bout à bout, dans lequel lesdits premier (2) et deuxième (7) éléments sont deux éléments séparés, ledit premier tube (9) est muni d'un trou (12), ledit deuxième élément est formé de façon à coincider parfaitement à la forme dudit deuxième tube (10, 11) à souder par la soudure bout à bout avec le premier tube (9) autour dudit trou (12) et à concorder à la surface de fusion réalisée sur ledit premier tube (9) par ledit premier élément (2); lesdits premier (2) et deuxième (7) éléments étant munis d'un surface postérieure (2'', 7'') pour contacter avec la plaque plate (1), ainsi que de moyens (3; 4; 8) pour l'accouplement avec la surface plate de ladite plaque (1), caractérisé en ce que ledit premier élément (2) a une section transversale elliptique, dont rebord est élevé aux endroits correspondants au petit axe de l'ellipse et a un'épaisseur plus petit qu'aux endroits correspondants au grand axe de l'ellipse et est muni d'un élément central (6) d'un matériau non conductive ayant un diamètre correspondant au diamètre du trou (12) percé dans ledit premier tube (9).

2. Outillage selon la revendication 1, caractérisé en ce que lasdits premier (2) et deuxième (7) éléments sont réalisés d'acier ou d'aluminium.

3. Outillage selon la revendication 1 ou 2, caractérisé en ce que lesdits premier (2) et deuxième (7) éléments sont recouverts d'un matériau inerte ou non attacable.

4. Outillage selon l'une quelconque des revendications précédentes, caractérisé en ce que l'élément central (6) placé dans le premier élément (2) est réalisé en utilisant un matériau céramique.

5. Outillage selon l'une quelconque des revendications précédentes, caractérisé en ce que l'élément central (6) est vissé dans ledit premier élément (2).

6. Outillage selon l'une quelconque des revendications précédentes, caractérisé en ce que les moyens pour coupler lesdits premier (2) et deuxième (7) éléments avec ladite plaque (1) consistent d'une vis, qui pass à travers la surface postérieure plate (2'') dudit premier élément (2) dans un trou (5) percé dans ladite plaque (1), qui est couplée avec un siège fileté (8) prévu dans le deuxième élément (7).

7. Procédé pour le sondage par fusion des éléments de tuyaux en plastique, dans lequel on utilise l'outillage selon l'une quelconque des revendications 1-6, comprenant l'étape d'assemblage dudit premier élément et dudit deuxième élément sur la surface postérieure plate de la plaque; ledit procédé étant caracterisé en ce que ledit premier élément est completé par un pivot pendant l'assemblage avec ledit deuxième élément et en ce qu'il comprend les étapes de
- chauffage de la plaque de fusion et par suite du premier et du deuxième élément;
- mise en contact de la surface laterale d'un premier tube avec la surface de fusion du premier élément, ladite surface étant en précédance percée et desoxidisée par un dispositif de raclage sur la portion à souder;
- mise en contact de la surface de tête d'un morceu du tube avec la surface de fusion du deuxieme élément, ladite surface de tête étant formée en précédence:
- chauffage, sans presser, jusqu'au debut de la fusion des deux portions à soudre et
- mise en contact des deux surface en fusion pendant quelques secondes pour laisar solidifier le materiau fondu.

8. Raccord ou morceau de tube de raccord ayant la forme correspondante à la forme dudit deuxième élément et une section transversale pour réaliser l'operation de soudure bout à bout avec un serpentin de tuyau ou un autre élément, caracterisé en ce qu'il consist de plastique, son paroi a une section transversal elliptique à l'endroit correspondant à la zone de soudure et en ce qu'il a un épaisseur variable le long du contour, l'épaisseur du rebord sur le petit axe de l'ellipse étant plus petit que aux endroits correspondants au gruand axe de l'ellipse.

9. Raccord ou morceau de tube de raccord selon la revendication 8, caractérisé en ce qu'il est droit.

10. Raccord ou morceau de tube de raccord selon la revendication 8, caractérisé en ce qu'il est incurvé.
